# FASCICULE DE BREVET EUROPEEN

(11) **EP 1 939 374 B1**
(45) Date de publication et mention de la délivrance du brevet: **05.06.2013**
(21) Numéro de dépôt: 07352009.0
(22) Date de dépôt: 21.12.2007
(51) Int. Cl.: E04F 13/04, E04F 13/10, E04F 13/18, E04F 15/02, E04F 15/18, B32B 13/12, B32B 21/08, E04B 1/80, E04C 2/284, F16L 59/08

(54) **Panneau de parement à isolant thermique multicouche**
Verkleidungspaneel mit einer mehrschichtigen Wärmedämmplatte
Facing with multi-layer thermal insulation

(30) Priorité: 22.12.2006 FR 0611275
(43) Date de publication de la demande: 02.07.2008
(73) Titulaire: Orion Financement Société Anonyme, 75755 Paris Cedex 15 (FR)
(72) Inventeur: Thierry, Laurent, 09500 Mirepoix (FR)
(74) Mandataire: Cabinet BARRE LAFORGUE & associés

(56) Documents cités:
- EP-A1- 0 718 447
- WO-A-2004/051020
- DE-A1- 3 725 866

## Description

L'invention concerne un panneau de parement isolant rigide modulaire destiné à être assemblé à une structure porteuse de bâtiment pour permettre la réalisation, avec une pluralité de tels panneaux assemblés bords à bords, de faces de parement de murs, plafonds ou planchers.

Dans le domaine de la construction des bâtiments on utilise traditionnellement des panneaux de parement modulaires assemblés bords à bords à une structure porteuse du bâtiment (telle qu'une ossature métallique et/ou en bois ou des cloisons ou murs porteurs) pour former des faces de parement permettant de constituer ou de recevoir la finition décorative visible (lambris, frisette, revêtement de peinture, papier peint, tissu décoratif...). De tels panneaux de parement modulaires sont en général utilisés pour la finition des parois intérieures de locaux. Ils peuvent dans certains cas également être utilisés pour les parois extérieures. Outre leur fonction décorative, ils ont un rôle de support mécanique (pour les revêtements de finition décorative et/ou l'accrochage de meubles, de tableaux, d'accessoires de confort (prises électriques, interrupteurs, luminaires, plomberie, chauffage...) ou d'autres objets) et de protection de la structure porteuse et/ou des organes techniques tels que les gaines, conduites, câbles, boîtiers... Ces panneaux de parement modulaires se rencontrent le plus souvent sous la forme de plaques de plâtre dont les faces principales sont protégées par du carton ou du papier, ou de plaques de bois massif (lambris ou frisette) ou reconstitué (bois aggloméré ou composite), ou de plaques de matériau polymérique synthétique (par exemple PVC). Ces panneaux de parement connus sont le plus souvent assemblés à la structure porteuse du bâtiment par vissage ou par collage. Les jonctions entre panneaux sont réalisées bords à bords avec éventuellement des joints en forme de bande ou de colle. Ces panneaux rigides connus peuvent être découpés à la scie ou au cutter. Ils sont relativement lourds et fragiles et présentent de piètres performances d'isolation thermique.

Or, la réalisation des parois d'un bâtiment nécessite souvent la pose d'un isolant thermique. Dans ce contexte, l'invention vise de façon générale à proposer des panneaux de parement qui présentent aussi des propriétés d'isolation thermique, de façon à permettre la pose simultanée du parement et d'un isolant thermique lors de la réalisation d'une paroi.

Dans ce but, il a déjà été proposé d'associer un matériau d'isolation thermique traditionnel tel que de la laine de verre, de la laine de roche ou du polystyrène expansé, à des panneaux de parement modulaires. Les performances d'isolation de ces panneaux isolants sont étroitement liées à leur épaisseur, qui varie en général entre 30 mm et 120 mm. Mais plus le panneau est épais, plus il est lourd et difficile à manipuler. En outre, une telle épaisseur de panneaux de parement n'est pas toujours compatible avec les contraintes dimensionnelles du bâtiment. Ces panneaux de parement isolants ne peuvent être assemblés que par collage sur une paroi sous-jacente, avec des jonctions bords à bords des panneaux, et une découpe à la scie.

Outre les isolant thermiques traditionnels tels que la laine de verre ou la laine de roche, on connaît aujourd'hui des isolants minces multicouches formés d'une superposition de films réfléchissants tels que des films d'aluminium, et de nappes souples de ouate et/ou d'isolants naturels ou synthétiques de séparation entre les films réflecteurs. Ces isolants multicouches comprennent typiquement entre 5 et 15 couches superposées et sont le plus souvent souples (ni rigides ni élastiques en flexion) et légers, ce qui facilite leur pose et permet leur présentation sous la forme de rouleaux. Leur épaisseur varie en général entre 5 mm et 50 mm. Ils doivent être posés par agrafage et/ou clouage, et ne peuvent en général pas être vissés du fait de la présence de matériaux fibreux dans les nappes de séparation. En outre, ils doivent être découpés à l'aide d'outils spécifiquement adaptés. Ces isolants minces multicouches fonctionnant essentiellement dans le mode radiatif, leur mise en oeuvre impose le respect de règles spécifiques : les bords périphériques doivent être fermés, la jonction entre les lés doit se faire par chevauchement pour assurer une bonne étanchéité à l'air, et une lame d'air doit être ménagée sur chacune des faces externes. En conséquence, ces isolants minces multicouches ne sont pas compatibles avec des panneaux de parement traditionnels, et ne peuvent donc pas être associés à ces derniers pour une pose unique. De même, certains isolants multicouches comprenant des films à bulles d'air (EP 0718447) ont été proposés. Là encore, la présence de films à bulles d'air présente les mêmes inconvénients à savoir gêner la découpe du panneau et le vissage.

Dans ce contexte, l'inventeur a déterminé qu'il y aurait intérêt à disposer de panneaux de parement isolants rigides modulaires permettant, en une seule étape de pose de ces panneaux, de réaliser à la fois le parement et l'isolation thermique, qui puissent être découpés et assemblés de la même façon que des panneaux de parement traditionnels, et qui présentent une épaisseur compatible avec leur utilisation dans la majorité des situations rencontrées sur les chantiers, notamment comprise entre 20 mm et 75 mm.

L'invention vise donc à pallier l'ensemble des inconvénients mentionnés ci-dessus de l'état de la technique, et en particulier à proposer des panneaux de parement isolants rigides modulaires dont l'épaisseur et le poids sont très nettement inférieurs à l'épaisseur et au poids des panneaux isolants connus, avec des performances d'isolation thermique améliorées. Autrement dit, l'invention vise à proposer des panneaux de parement isolants rigides modulaires présentant, pour une même épaisseur, des performances d'isolation thermique très nettement supérieures à celles des panneaux isolants connus.

Plus particulièrement, l'invention vise à proposer des panneaux de parement isolants rigides modulaires pouvant être assemblés bords à bords par vissage sur une structure porteuse, et aisément découpés à la scie ou au cutter.

L'invention vise également à proposer des panneaux de parement isolants rigides modulaires dont les performances thermiques peuvent être adaptées selon l'application qui en est faite.

L'invention vise de surcroît à proposer des panneaux de parement isolants rigides modulaires pouvant être fabriqués en grande série à l'échelle industrielle à faible coût, notamment sur une seule et même ligne de fabrication.

Dans tout le texte, on adopte la terminologie suivante :
- face peu émissive : toute face de film présentant une émissivité ε_{λ,δ} monochromatique directionnelle inférieure à 0,3 telle que mesurée selon la norme EN12898 (pour des longueurs d'onde λ comprises entre 5 µm et 50 µm),
- face réfléchissante : toute face d'un film présentant une réflectivité ρ_{λ,i} monochromatique directionnelle (hémisphérique ou spéculaire) supérieure à 0,8 telle que mesurée selon la norme EN12898 (pour des longueurs d'onde λ comprises entre 5 µm et 50 µm),
- film réfléchissant : tout film dont une des faces est à la fois réfléchissante et peu émissive et/ou dont les deux faces sont peu émissives et/ou dont les deux faces sont réfléchissantes,
- collé : ce terme ainsi que ses dérivés désignent toute solidarisation de deux éléments, que ce soit par l'intermédiaire d'une composition de collage rajoutée, ou au contraire sans adjonction de composition de collage, par adhésion mutuelle des deux éléments, par exemple par soudure ou co-extrusion.

L'invention concerne donc un panneau de parement isolant rigide modulaire destiné à être assemblé à une structure porteuse de bâtiment pour permettre la réalisation, avec une pluralité de tels panneaux assemblés bords à bords, de faces de parement de murs, plafonds ou planchers, ledit panneau comprenant :
- une plaque de parement plane rigide présentant deux faces principales planes parallèles, dont une face de parement et une face de contre parement,
- un isolant thermique fixé sur la face de contre parement de la plaque de parement,
caractérisé en ce que ledit isolant thermique est un isolant multicouche constitué d'une pluralité de films réfléchissants et d'une pluralité de couches de séparation superposés et collés par leurs faces principales, chaque couche de séparation étant formée d'une plaque ou feuille en matériau polymère solide non divisé, chaque film réfléchissant étant collé sur au moins une face d'une couche de séparation, avec une ou deux couche(s) de séparation entre chaque paire de films réfléchissants, et en ce que ledit isolant thermique est collé sur la face de contre parement de la plaque de parement.

Dans un panneau selon l'invention, chaque couche de séparation de l'isolant thermique étant formée d'une plaque ou feuille en matériau polymère solide non divisé, n'est donc pas un film à bulles d'air et n'est pas en matériau fibreux. De la sorte, l'isolant thermique ne gêne en aucune manière le passage de vis de fixation à travers l'isolant. En outre, le panneau selon l'invention peut être découpé à l'aide d'une scie ou d'un cutter.

Avantageusement et selon l'invention, chaque couche de séparation est formée d'une couche homogène d'épaisseur constante d'un même matériau, notamment d'une épaisseur de mousse de matériau polymère solide. En particulier, avantageusement et selon l'invention, chaque couche de séparation est formée d'une feuille de polymère solide moulé et/ou extrudé et/ou expansé.

Avantageusement et selon l'invention, chaque couche de séparation est formée d'un matériau dont la densité est inférieure à 500 kg/m³ - notamment inférieure à 20 kg/m³ -. De préférence, avantageusement et selon l'invention, il s'agit d'une épaisseur d'un matériau poreux homogène dans son épaisseur, par exemple une mousse de polymère, de préférence à cellules fermées. De tels matériaux sont non seulement légers, compatibles avec la pénétration de vis, mais également possèdent des propriétés d'isolation thermique excellentes. En outre, ils présentent des propriétés mécaniques, notamment en termes d'élasticité et de raideur en flexion, en traction et en compression qui participent considérablement au renfort de la plaque de parement.

Avantageusement et selon l'invention, chaque couche de séparation est donc formée d'une feuille ou d'une plaque d'épaisseur constante d'une mousse de matériau polymère. Plus particulièrement, avantageusement et selon l'invention, chaque couche de séparation est constituée en un matériau choisi dans le groupe formé des mousses de polyuréthane, des mousses de polyester, des mousses de polyéther, des mousses de polyoléfine (notamment des mousses de polyéthylène, des mousses de polypropylène, et des mousses d'alcools polyvinyliques), des mousses de polystyrène, des mousses polyacryliques, des mousses de polychlorure de vinyle (PVC), et des mousses de silicone. Il peut s'agir de mousses dites souples, c'est-à-dire élastiques en compression, ou de mousses rigides ou semi-rigides. Il peut s'agir d'une mousse obtenue soit par un procédé chimique (calcination d'un composé chimique absorbant à gaz ; décomposition d'un produit chimique ; dissolution d'un gaz neutre chimiquement inerte dans un polymère en fusion ; réaction de deux composés chimiques réactifs...) ou d'une mousse obtenue par voie mécanique, notamment par brassage mécanique d'un polymère en cours de polymérisation. Dans le cas d'une mousse de polyoléfine, la densité de la mousse est inférieure à 20 kg/m³ et est typiquement de l'ordre de 15 kg/m³. Dans le cas d'une mousse de PVC, la densité de la mousse est inférieure à 500 kg/m³ et est typiquement de l'ordre de 450 kg/m³.

Chaque couche de séparation se présente sous la forme d'une plaque ou d'une feuille monobloc autoportante de matériau solide polymère non fibreux, et est de préférence choisie pour présenter de bonnes propriétés d'isolation thermique en conduction. Chaque couche de séparation doit également être adaptée pour permettre le collage sur l'une de ses faces principales, soit d'un film réfléchissant, soit de la face de contre parement de la plaque de parement, soit d'une autre couche de séparation.

Avantageusement un panneau selon l'invention, comprend une pluralité de films réfléchissants et une pluralité de couches de séparation superposés et collés par leurs faces principales (sur toute leur surface de contact ou seulement sur une partie de cette surface, par exemple par des lignes et/ou bandes et/ou des points de collage). De préférence, au moins une couche de séparation est interposée entre chaque paire de films réfléchissants. Dans un mode de réalisation préférentiel, il est prévu une ou deux couches de séparation entre chaque paire de films réfléchissants. Avantageusement et selon l'invention, l'isolant thermique est formé d'une superposition d'au moins six éléments (films réfléchissants et couches de séparation), notamment d'un nombre d'éléments compris entre six et vingt. Par ailleurs, de préférence, l'épaisseur de chaque couche de séparation est inférieure ou égale à 10 mm.

En outre, avantageusement et selon l'invention, l'isolant thermique comprend au moins un film réfléchissant formant la face libre de l'isolant thermique et du panneau.

Du côté de la face de contre parement de la plaque de parement, l'isolant thermique peut être collé soit avec un film réfléchissant contre la face de contre parement, soit au contraire avec une couche de séparation contre la face de contre parement. De préférence, l'isolant thermique comprend un film réfléchissant collé contre la face de contre parement de la plaque de parement.

Par ailleurs, avantageusement et selon l'invention, l'isolant thermique (et donc chaque film réfléchissant et chaque couche de séparation qui le constitue) présente un format au moins égal à celui de la face de contre parement de la plaque de parement de façon à recouvrir au moins toute cette face de contre parement. De préférence, le format de l'isolant thermique correspond exactement à celui de la face contre parement. Rien n'empêche en variante de prévoir cependant que tout ou partie des couches constitutives de l'isolant thermique puisse déborder légèrement au-delà de la face de contre parement de la plaque de parement, sur au moins un bord de cette dernière, par exemple pour permettre de réaliser facilement un recouvrement, par ces couches de l'isolant thermique, des bords adjacents de plaques de parement assemblées bords à bords.

En outre, avantageusement et selon l'invention, la plaque de parement est une plaque rigide autoportante (c'est-à-dire qui ne se déforme pas sous son propre poids). Avantageusement et selon l'invention, la plaque de parement est choisie dans le groupe formé des plaques de plâtre, des plaques en bois, des plaques en matériaux composites, des plaques en polymère rigide. De préférence, la plaque de parement présente une épaisseur supérieure à 5 mm, notamment comprise entre 10 mm et 100 mm.

Avantageusement et selon l'invention l'épaisseur totale de l'isolant thermique est inférieure à 75 mm -notamment comprise entre 20 mm et 60 mm-. En outre, avantageusement et selon l'invention l'isolant thermique, et donc le panneau selon l'invention, est étanche à l'humidité. De la sorte, il empêche ou en tout cas limite les transferts d'humidité entre l'intérieur et l'extérieur du bâtiment. De même, l'isolant thermique est avantageusement étanche à l'air, de sorte qu'un panneau selon l'invention permet d'améliorer l'isolation du bâtiment vis-à-vis de la circulation d'air à travers les parois.

La combinaison des caractéristiques d'un panneau selon l'invention permet à la fois de lui conférer des propriétés d'isolation thermique excellentes, pour une faible épaisseur (facilitant notamment les opérations de portage et de manipulations à la main sur chantier), un faible poids, et des conditions d'assemblage et de découpe similaires à celles d'un panneau de parement traditionnel. En particulier, un panneau de parement selon l'invention peut être assemblé par vissage et découpé à la scie ou au cutter.

L'invention concerne également un panneau de parement isolant rigide modulaire caractérisé en combinaison par tout ou partie des caractéristiques mentionnées ci-dessus ou ci-après.

D'autres buts, caractéristiques et avantages de l'invention apparaîtront à lecture de la description suivante donnée à titre non limitatif d'un de ses modes de réalisation, et qui se réfère aux figures annexées dans lesquelles :
- la figure 1 est une vue schématique partielle en coupe transversale représentant un exemple de réalisation d'un panneau selon l'invention,
- la figure 2 est une vue schématique partielle en coupe verticale représentant un exemple d'utilisation d'un panneau selon l'invention pour la finition d'une paroi verticale intérieure.

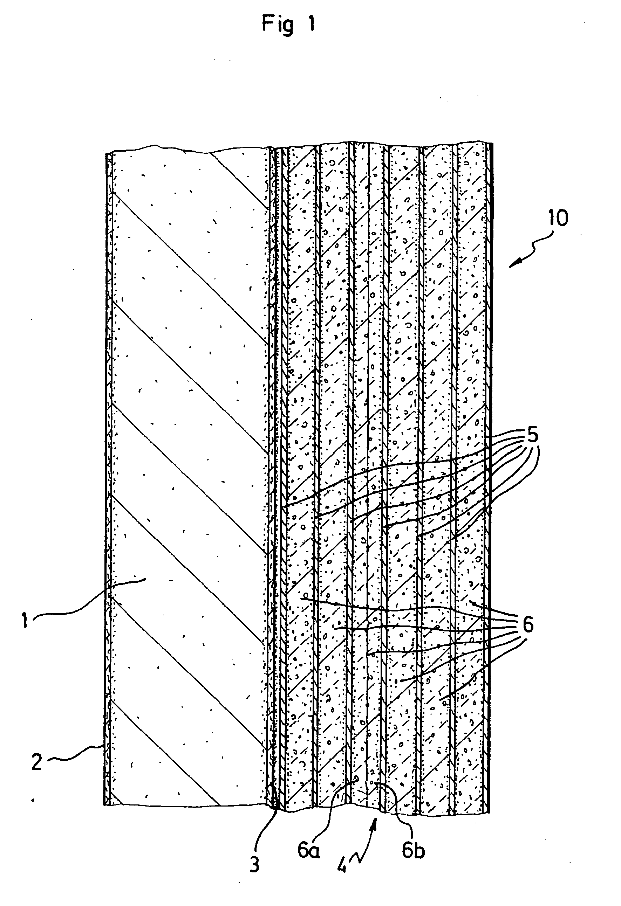

Comme représenté sur la figure 1, le panneau selon l'invention comprend une plaque plane rigide de parement 1 qui peut être par exemple une plaque de plâtre, une plaque en bois, une plaque en matériau composite, par exemple en bois reconstitué ou aggloméré, une plaque en matériau polymère rigide, par exemple en PVC...La plaque de parement 1 présente deux faces principales planes parallèles, à savoir une face de parement 2 (destinée à constituer ou à recevoir une finition décorative visible) et une face de contre parement 3 (destinée à être invisible, orientée vers une structure porteuse du bâtiment recevant la plaque de parement 1). La plaque de parement 1 présente une épaisseur de préférence supérieure à 5 mm, notamment comprise entre 10 mm et 100 mm.

Un isolant thermique multicouche 4 est fixé collé sur la face de contre parement 3 de la plaque de parement 1. Cet isolant thermique 4 est de préférence au format de la plaque de parement 1. Il est solidaire de la plaque de parement 1 et peut donc être découpé avec cette dernière. En variante non représentée, rien n'empêche de prévoir que tout ou partie des couches constitutives de l'isolant thermique 4 présente un format supérieur à celui de la face de contre parement 3, par exemple avec une bande latérale s'étendant au-delà de la face de contre parement 3 le long d'au moins l'un de ses bords, pour permettre le recouvrement, par cette bande latérale, des bords adjacents de deux plaques 1 assemblées bords à bords.

Dans l'exemple représenté figure 1, l'isolant thermique 4 comprend quatorze composants, à savoir sept films réfléchissants 5 séparés les uns des autres par des couches de séparation 6, dont le nombre total est de sept. Les films réfléchissants 5 peuvent être tous identiques ou non. Chaque film réfléchissant 5 est par exemple formé d'un film choisi dans le groupe constitué des films à base de polyester, des films à base de polyéther, des films à base de polypropylène, des films à base de polyéthylène, et des films à base de PVC, et présente une épaisseur comprise entre 10 µm et 500 µm -typiquement de l'ordre de 15 µm à 100 µm-armature éventuelle du film non comprise. Chacune des faces principales du film 5, où l'une seulement de ces faces principales, est métallisée, par exemple par un dépôt d'aluminium sous vide, et présente donc une réflectivité élevée.

Au moins une couche de séparation 6 est intercalée entre deux films réfléchissants 5. Dans l'exemple représenté, une couche unique de séparation 6 est intercalée entre la plupart des paires de films réfléchissants 5 successives, à l'exception d'une paire centrale de films réfléchissants 5 séparés par deux couches de séparation 6a, 6b juxtaposées et collées l'une à l'autre. Le fait de prévoir au moins une paire de couches de séparation juxtaposées et collées l'une à l'autre au sein de l'isolant thermique 4 (à la place d'une seule couche de séparation 6) permet en pratique, à épaisseur égale, d'en améliorer les propriétés d'isolation thermique. De nombreuses autres variantes sont possibles. Par exemple, il peut être prévu une seule couche de séparation 6 entre chaque paire de films réfléchissants 5 sur toute l'épaisseur de l'isolant thermique 4.

Chaque film réfléchissant 5 est collé sur chacune des couches de séparation 6 au contact de laquelle il est placé, par exemple à l'aide d'une colle à chaud (c'est-à-dire thermoréactivable), ou simplement par collage à chaud du film réfléchissant 5 directement sur la couche de séparation 6 lorsque cette dernière est formée d'un matériau thermoplastique et constitue donc elle-même une colle à chaud.

Chacune des couches de séparation 6 est formée d'une plaque ou d'une feuille en un matériau polymère solide non divisé, de préférence présentant une densité inférieure à 20 kg/m³. Avantageusement, il s'agit d'un matériau poreux, par exemple choisi dans le groupe formé des mousses de polyuréthane, des mousses de polyester, des mousses de polyéther, des mousses de polyoléfine (notamment des mousses de polyéthylène, des mousses de polypropylène, et des mousses d'alcools polyvinyliques), des mousses de polystyrène, des mousses polyacryliques, des mousses de polychlorure de vinyle (PVC), et des mousses de silicone. De préférence, on choisit une mousse à cellules fermées qui présente de meilleures propriétés d'isolation thermique.

Chaque couche de séparation 6 peut-être une couche continue, c'est-à-dire entièrement pleine sur toute sa surface (qui correspond au moins sensiblement au format de la face contre parement). En variante, chaque couche de séparation 6 peut être dotée d'évidements régulièrement répartis (comme décrit par exemple par FR 2847650).

De préférence, toutes les couches de séparation 6 sont constituées d'un même matériau. Rien n'empêche cependant de prévoir que l'isolant thermique 4 présente des couches de séparation de différentes natures. Chaque couche de séparation 6 est adaptée en particulier pour :
- présenter des propriétés d'isolation thermique aussi bonnes que possible,
- pouvoir être collée à un film réfléchissant 5 ou à la face de contre parement de la plaque de parement 1,
- être compatible avec un assemblage du panneau par vissage, c'est-à-dire pour pouvoir être traversée par des vis auto perforantes et/ou pour pouvoir être percée,
- être aussi légère que possible,
- être compatible avec une découpe à la scie ou au cutter.

D'excellents résultats ont été obtenus avec des couches de séparation 5 formées d'une mousse de polyéthylène basse densité ou d'une mousse de polypropylène de densité comprise entre 15 et 20 kg/m³. En variante ou en combinaison, on peut utiliser au moins une couche de séparation 6 formée d'une mousse de PVC présentant une résistance au feu améliorée et éventuellement ignifugée, dont la densité est de l'ordre de 450kg/m³.

Dans l'exemple représenté figure 1, l'isolant thermique 4 présente un film réfléchissant 5 collé au contact de la face de contre parement 3 de la plaque de parement 1. Rien n'empêche au contraire en variante de prévoir que l'isolant thermique 4 puisse être collé sur la face de contre parement 3 par une couche de séparation 6.

De préférence, la face libre 7 de l'isolant thermique 4, et donc du panneau selon l'invention, qui est opposée à la face de parement 2 est formée d'un film réfléchissant 5. En effet, ce film réfléchissant 5 forme une pellicule d'étanchéité empêchant notamment la pénétration d'eau ou de vapeur d'eau au sein de la couche de séparation 6 située le plus à l'extérieur. Avantageusement, ce film extérieur est de type armé, c'est-à-dire incorpore une grille de renfort, ce qui permet d'en améliorer la solidité et la résistance aux déchirures lors des manipulations et du transport.

Bien entendu, le nombre de films réfléchissants 5 et le nombre de couches de séparation 6 peuvent être différents. De préférence, le nombre de films réfléchissants 5 est supérieur à trois, plus particulièrement supérieur à cinq. De même, de préférence, le nombre de couches de séparation 6 est supérieur à trois, plus particulièrement supérieur à 5. Un isolant thermique 4 selon l'invention comprend de préférence un nombre total d'éléments 5, 6 superposés supérieur à dix, notamment compris entre six et vingt.

Le collage de chaque film réfléchissant 5 sur une couche de séparation 6, et plus généralement le collage de chacune des épaisseurs constitutives de l'isolant thermique 4 les unes aux autres, ainsi que le collage de l'isolant thermique 4 sur la plaque de parement 1, peuvent être réalisés de toute façon connue en soi permettant d'obtenir une adhésion de surface appropriée. En particulier, on peut réaliser ces collages à l'aide d'une couche intermédiaire de colle (colle en émulsion aqueuse ou en émulsion dans un solvant non aqueux, colle sans solvant thermoréactivable appliquée à chaud (de type «hot-melt »),...), ou directement par chauffage de l'une au moins des deux épaisseurs à coller formée d'une matière thermoplastique. La mise en oeuvre d'un tel collage peut être effectuée par insertion d'un film thermoréactivable, de feuilles ou rubans adhésifs, enduction de l'une ou l'autre des surfaces à coller par une colle, pulvérisation d'une colle, chauffage à l'aide d'une buse d'air chaud et calandrage,... Ces collages peuvent être décollages de type surfacique s'étendant sur toutes les surfaces de contact, au contraire réalisés par des lignes et/ou bandes et/ou points de collage régulièrement répartis.

L'isolant thermique 4 formé d'une succession de couches collées les unes aux autres présente une cohésion mécanique importante renforçant considérablement la plaque de parement 1 du point de vue de sa résistance à la rupture en flexion, de sa résistance aux chocs, de sa rigidité, et de son éventuelle fragilité.

Un tel panneau 10 conforme à l'invention peut être fabriqué de la façon suivante. On fabrique d'abord des rouleaux de chaque couche de séparation 6 en mousse, par exemple par extrusion/expansion. De même, on fabrique des rouleaux de chaque film réfléchissant 5. On réalise ensuite l'isolant thermique 4 multicouche par assemblage en continu et collage à chaud (directement s'il s'agit de matériau thermoplastique ou par l'intermédiaire d'une couche de collage intercalée) des films réfléchissants 5 et des couches de séparation 6. L'isolant thermique 4 obtenu est ensuite collé à la plaque de parement 1, sur sa face de contre parement 3, par l'intermédiaire d'une couche de colle déposée par exemple par pulvérisation. D'autres modes d'assemblage et de fabrication sont bien sûr possibles. Un panneau 10 selon l'invention est donc un panneau préfabriqué prêt à l'emploi sur chantier.

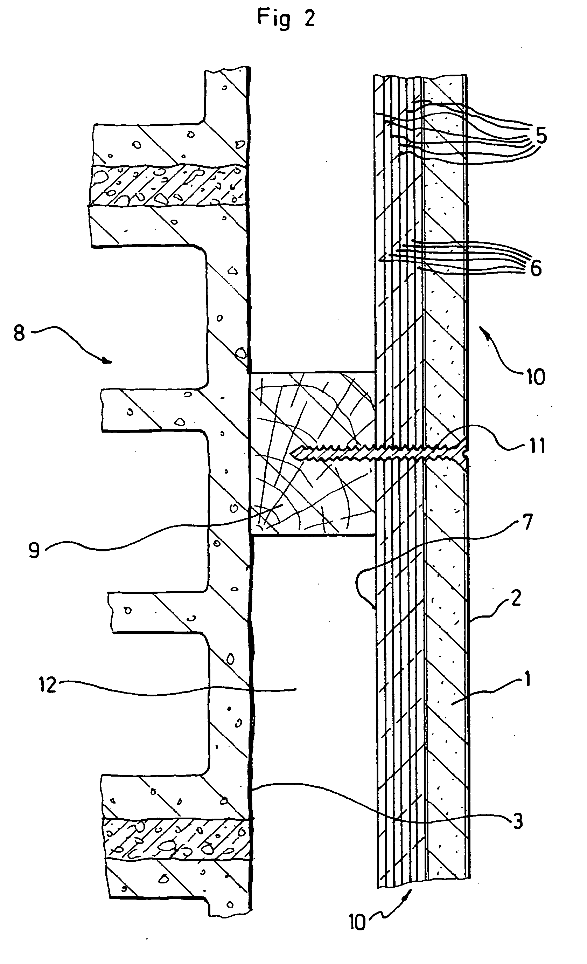

La figure 2 représente un exemple de montage d'un panneau selon l'invention pour la finition d'une paroi verticale intérieure 7. Cette paroi verticale intérieure comprend une âme de maçonnerie 8 recevant un cadre d'espacement 9 formé par exemple de tasseaux de bois. Les panneaux 10 selon l'invention sont directement vissés sur les tasseaux du cadre 9 par des vis 11, l'isolant thermique 4 étant orienté vers le cadre 9, la plaque de parement 1 étant orientée vers l'intérieur de la pièce.

Il va de soi que, en variante ou en combinaison, des panneaux selon l'invention peuvent être fixés par tout autre moyen, par exemple par agrafage et/ou par clouage, et/ou par collage directement sur une maçonnerie ou sur une ossature en bois ou métallique. En tout état de cause, la mise en oeuvre, la manipulation et le transport d'un panneau selon l'invention sont extrêmement simples et commodes. En outre, les performances thermiques d'un panneau selon l'invention sont excellentes, pour une faible épaisseur, et un faible coût de fabrication.

Rien n'empêche de prévoir un isolant thermique supplémentaire posé avant les panneaux selon l'invention, si une isolation renforcée est souhaitée. En particulier, dans l'exemple représenté, l'espace 12 ménagé entre la face libre 7 de l'isolant thermique 4 et l'âme de maçonnerie 8 grâce au cadre d'espacement 9 est laissé libre. Rien n'empêche en variante d'insérer un autre matériau d'isolation thermique (par exemple laine de verre ou laine de roche) à l'intérieur de cet espace 12 avant ou pendant la pose du panneau 10.

## Revendications

1. Panneau de parement (10) isolant rigide modulaire destiné à être assemblé à une structure porteuse de bâtiment pour permettre la réalisation, avec une pluralité de tels panneaux assemblés bords à bords, de faces de parement de murs, plafonds ou planchers, ledit panneau comprenant :
- une plaque de parement (1) plane rigide présentant deux faces principales planes parallèles, dont une face de parement (2) et une face de contre parement (3),
- un isolant thermique (4) fixé sur la face de contre parement (3) de la plaque de parement (1),
**caractérisé en ce que** ledit isolant thermique (4) est un isolant multicouche constitué d'une pluralité de films réfléchissants (5) et d'une pluralité de couches de séparation (6) superposés et collés par leurs faces principales, chaque couche de séparation (6) étant formée d'une plaque ou feuille en matériau polymère solide non divisé, chaque film réfléchissant (5) étant collé sur au moins une face d'une couche de séparation (6), avec une ou deux couche(s) de séparation (6) entre chaque paire de films réfléchissants (5), et **en ce que** ledit isolant thermique (4) est collé sur la face de contre parement (3) de la plaque de parement (1).

2. Panneau selon la revendication 1, **caractérisé en ce que** chaque couche de séparation (6) est formée d'un matériau dont la densité est inférieure à 500 kg/m³ - notamment inférieure à 20kg/m³ -.

3. Panneau selon l'une des revendications 1 à 2, **caractérisé en ce que** chaque couche de séparation (6) est formée d'une plaque ou feuille de polymère solide moulé et/ou extrudé et/ou expansé.

4. Panneau selon l'une des revendications 1 à 3, **caractérisé en ce que** chaque couche de séparation (6) est formée d'une épaisseur de mousse de matériau polymère solide.

5. Panneau selon l'une des revendications 1 à 4, **caractérisé en ce que** chaque couche de séparation (6) est constituée en un matériau choisi dans le groupe formé:des mousses de polyuréthane; des mousses de polyester; des mousses de polyéther; des mousses de polyoléfine, notamment des mousses de polyéthylène, des mousses de polypropylène, et des mousses d'alcools polyvinyliques; des mousses de polystyrène; des mousses polyacryliques; des mousses de polychlorure de vinyle (PVC); et des mousses de silicone.

6. Panneau selon l'une des revendications 1 à 5, **caractérisé en ce que** l'épaisseur de chaque couche de séparation (6) est inférieure ou égale à 10 mm.

7. Panneau selon l'une des revendications 1 à 6, **caractérisé en ce que** l'isolant thermique (4) comprend au moins un film réfléchissant (5) formant la face libre (7) de l'isolant thermique (4) et du panneau.

8. Panneau selon l'une des revendications 1 à 7, **caractérisé en ce que** l'isolant thermique (4) comprend un film réfléchissant (5) collé contre la face de contre parement (3) de la plaque de parement (1).

9. Panneau selon l'une des revendications 1 à 8, **caractérisé en ce que** l'isolant thermique (4) présente un format au moins égal à celui de la face de contre parement (3) de la plaque de parement (1) de façon à recouvrir au moins toute cette face de contre parement (3).

10. Panneau selon l'une des revendications 1 à 9, **caractérisé en ce que** la plaque de parement (1) est choisie dans le groupe formé des plaques de plâtre, des plaques en bois, des plaques en matériaux composites, des plaques en polymère rigide.

11. Panneau selon l'une des revendications 1 à 10, **caractérisé en ce que** l'isolant thermique (4) est étanche à l'humidité.

12. Panneau selon l'une des revendications 1 à 11, **caractérisé en ce que** l'épaisseur totale de l'isolant thermique est inférieure à 75 mm.

13. Panneau selon l'une des revendications 1 à 12, **caractérisé en ce que** l'isolant thermique (4) est formé d'une superposition d'au moins six éléments, c'est à dire de films réfléchissants (5) et couches de séparation(6), notamment d'un nombre d'éléments compris entre six et vingt.

14. Panneau selon l'une des revendications 1 à 13, **caractérisé en ce que** la plaque de parement (1) présente une épaisseur supérieure à 5 mm, notamment comprise entre 10 mm et 100 mm.

## Patentansprüche

1. Steifes, isolierendes und modulares Verkleidungspaneel (10), das dazu bestimmt ist, auf einer Gebäudeträgerstruktur montiert zu werden, um mit einer Vielzahl solcher Paneele, die jeweils an ihren Rändern zusammengefügt werden, die Herstellung von Wand-, Decken- und Bodenverkleidungsflächen zu ermöglichen, wobei das Paneel folgendes umfasst:
- eine ebene und steife Verkleidungsplatte (1) mit zwei ebenen und parallelen Hauptseiten, darunter eine Verkleidungsseite (2) und eine Unterseite (3),
- eine Wärmedämmung (4), die auf der Unterseite (3) der Verkleidungsplatte (1) befestigt ist,
**dadurch gekennzeichnet, dass** die besagte Wärmedämmung (4) eine mehrschichtige Dämmung ist, die aus einer Vielzahl reflektierender Folien (5) und einer Vielzahl von Trennschichten (6) besteht, die sich an ihren Hauptseiten überdecken und verklebt sind, und jede Trennschicht (6) aus einer Platte oder einer Folie aus einem soliden und ungeteilten Polymerwerkstoff besteht, und jede reflektierende Folie (5) auf zumindest eine Seite einer Trennschicht (6) geklebt ist, mit einer oder mit zwei Trennschicht(en) (6) zwischen jedem reflektierenden Folienpaar (5), und dadurch, dass die besagte Wärmedämmung (4) auf die Unterseite (3) der Verkleidungsplatte (1) geklebt ist.

2. Paneel nach Anspruch 1, **dadurch gekennzeichnet, dass** jede Trennschicht (6) aus einem Werkstoff gebildet wird, dessen Dichte kleiner als 500 kg/m³ - vor allem kleiner als 20 kg/m³ ist.

3. Paneel nach einem der Ansprüche 1 bis 2, **dadurch gekennzeichnet, dass** jede Trennschicht (6) aus einer Platte oder einer Folie aus einem robusten abgeformten und/ oder extrudierten und/ oder expandierten Polymer besteht.

4. Paneel nach einem der Ansprüche 1 bis 3, **dadurch gekennzeichnet, dass** jede Trennschicht (6) aus einer Schaumstoffschicht aus einem robusten Polymerwerkstoff besteht.

5. Paneel nach einem der Ansprüche 1 bis 4, **dadurch gekennzeichnet, dass** jede Trennschicht (6) aus einem Werkstoff besteht, der aus einer Gruppe ausgewählt wird, die sich aus Polyurethanschaum, Polyesterschaum, Polyätherschaum, Polyolefinschaum, vor allem aus Polyethylenschäumen, Polypropylenschäumen, Polyvinylalkoholschäumen, Polystyrolschäumen, Polyacrylschäumen, Polyvinylchloridschäumen (PVC) und Silikonschäumen zusammensetzt.

6. Paneel nach einem der Ansprüche 1 bis 5, **dadurch gekennzeichnet, dass** die Dicke jeder Trennschicht (6) kleiner oder gleich 10 mm ist.

7. Paneel nach einem der Ansprüche 1 bis 6, **dadurch gekennzeichnet, dass** die Wärmedämmung (4) zumindest eine reflektierende Folie (5) umfasst, die die freie Seite (7) der Wärmedämmung (4) und des Paneels bildet.

8. Paneel nach einem der Ansprüche 1 bis 7, **dadurch gekennzeichnet, dass** die Wärmedämmung (4) eine reflektierende Folie (5) umfasst, die auf die Unterseite (3) der Verkleidungsplatte (1) geklebt ist.

9. Paneel nach einem der Ansprüche 1 bis 8, **dadurch gekennzeichnet, dass** die Wärmedämmung (4) ein Format zumindest gleich jenem der Unterseite (3) der Verkleidungsplatte (1) aufweist, um zumindest diese gesamte Fläche der Unterseite (3) abzudecken.

10. Paneel nach einem der Ansprüche 1 bis 9, **dadurch gekennzeichnet, dass** die Verkleidungsplatte (1) aus einer Gruppe ausgewählt wird, die sich aus Gipsplatten, Holzplatten, Platten aus Verbundmaterial und Platten aus steifem Polymer zusammensetzt.

11. Paneel nach einem der Ansprüche 1 bis 10, **dadurch gekennzeichnet, dass** die Wärmedämmung (4) feuchtigkeitsbeständig ist.

12. Paneel nach einem der Ansprüche 1 bis 11, **dadurch gekennzeichnet, dass** die Gesamtdicke der Wärmedämmung kleiner als 75 mm ist.

13. Paneel nach einem der Ansprüche 1 bis 12, **dadurch gekennzeichnet, dass** die Wärmedämmung (4) aus einer Überdeckung von zumindest sechs Elementen gebildet wird, das heißt aus reflektierenden Folien (5) und Trennschichten (6), vor allem aus einer Anzahl zwischen sechs und zwanzig Elementen.

14. Paneel nach einem der Ansprüche 1 bis 13, **dadurch gekennzeichnet, dass** die Verkleidungsplatte (1) eine Dicke von über 5 mm aufweist, vor allem aber zwischen 10 mm und 100 mm.

## Claims

1. Rigid modular insulating facing panel (10) for assembly to a supporting structure of a building in order to permit the production, using a plurality of such panels assembled edge to edge, of facing faces for walls, ceilings or floors, said panel comprising:
- a rigid planar facing board (1) having two parallel planar main faces, which are a facing face (2) and a back face (3),
- a thermal insulating material (4) fixed to the back face (3) of the facing board (1),
**characterised in that** said thermal insulating material (4) is a multilayer insulating material constituted by a plurality of reflective films (5) and a plurality of separating layers (6) that are superposed and bonded by their main faces, each separating layer (6) being formed by a board or sheet of solid non-divided polymer material, each reflective film (5) being bonded to at least one face of a separating layer (6), with one or two separating layer(s) (6) between each pair of reflective films (5), and **in that** said thermal insulating material (4) is bonded to the back face (3) of the facing board (1).

2. Panel according to claim 1, **characterised in that** each separating layer (6) is formed of a material the density of which is less than 500 kg/m³, especially less than 20 kg/m³.

3. Panel according to either claim 1 or claim 2, **characterised in that** each separating layer (6) is formed of a board or sheet of moulded and/or extruded and/or expanded solid polymer.

4. Panel according to any one of claims 1 to 3, **characterised in that** each separating layer (6) is formed of a thickness of foam of solid polymer material.

5. Panel according to any one of claims 1 to 4, **characterised in that** each separating layer (6) is constituted by a material selected from the group formed of: polyurethane foams; polyester foams; polyether foams; polyolefin foams, especially polyethylene foams, polypropylene foams and polyvinyl alcohol foams; polystyrene foams; polyacrylic foams; polyvinyl chloride (PVC) foams; and silicone foams.

6. Panel according to any one of claims 1 to 5, **characterised in that** the thickness of each separating layer (6) is less than or equal to 10 mm.

7. Panel according to any one of claims 1 to 6, **characterised in that** the thermal insulating material (4) comprises at least one reflective film (5) forming the free face (7) of the thermal insulating material (4) and of the panel.

8. Panel according to any one of claims 1 to 7, **characterised in that** the thermal insulating material (4) comprises a reflective film (5) bonded to the back face (3) of the facing board (1).

9. Panel according to any one of claims 1 to 8, **characterised in that** the thermal insulating material (4) has a size at least equal to that of the back face (3) of the facing board (1) so that it covers at least all of the back face (3).

10. Panel according to any one of claims 1 to 9, **characterised in that** the facing board (1) is chosen from the group formed of plaster boards, wood boards, composite material boards, rigid polymer boards.

11. Panel according to any one of claims 1 to 10, **characterised in that** the thermal insulating material (4) is moisture-tight.

12. Panel according to any one of claims 1 to 11, **characterised in that** the total thickness of the thermal insulating material is less than 75 mm.

13. Panel according to any one of claims 1 to 12, **characterised in that** the thermal insulating material (4) is formed of a superposition of at least six elements, that is to say of reflective films (5) and separating layers (6), especially of a number of elements of from six to twenty.

14. Panel according to any one of claims 1 to 13, **characterised in that** the facing board (1) has a thickness greater than 5 mm, especially from 10 mm to 100 mm.
